# EUROPEAN PATENT APPLICATION

(11) **EP 2 778 398 A2**
(43) Date of publication of application: **17.09.2014**
(21) Application number: 14159288.1
(22) Date of filing: 12.03.2014
(51) Int. Cl.: F03D 7/02

(54) **Failsafe deployment system for wind turbine blade air deflector**

(30) Priority: 15.03.2013 US 201313831956
(71) Applicant: Frontier Wind, LLC, West Conshohocken, PA 19428 (US)
(72) Inventor: BROOKS, Peter Everett, Rochester, MN Minnesota 55904 (US); MILLER, Myron Floyd, West Lafayette, IN Indiana 47906 (US); GREEN, Thomas Jay, Roseville, CA California 95661 (US)
(74) Representative: Musker, David Charles

(57) **Abstract**

An apparatus and system for automatically deploying an air deflector of a load compensating device when there is a loss of communication or power is provided. In some examples, the apparatus and system may include a spring configured to rotate a gear, thereby deploying the air deflector. In some arrangements, the spring may be a torsion spring and may be biased to rotate the gear when released from a hold position maintained by a latch. The latch may be controlled by a release mechanism, such as a solenoid, that may be configured to activate upon occurrence of a communication loss event. The release mechanism may release the latch, thereby releasing the spring and deploying the air deflector.

## Description

### BACKGROUND

Wind turbines create power proportional to the swept area of their blades. The choice of rotor attributes for a wind turbine, such as its diameter, is a design trade-off between longer blades for more energy production in low winds and shorter blades for load limitation in high winds. Thus, wind turbine having longer blades will increase the swept area, which in turn produces more power. However, at high wind speeds, a wind turbine having longer blades places greater demands on the components and creates more situations where the turbine must be shut down to avoid damaging components. Even in situations where the average wind speed is not high enough to cause damage, periodic wind gusts which change both the speed and direction of the wind, apply forces that may be strong enough to damage equipment.

In some wind turbine arrangements, deflectors are used to optimize wind turbine loading. However, in situations in which there is a loss of communication or power, the position of the air deflector may adversely affect performance. For instance, in a large gust, the rotor blade may exceed various ratings (e.g., power load rating, fatigue load rating, and the like) without the assistance of an air deflector. However, in situations where there is a loss of power or communication, the air deflector may not be deployable or retractable, as needed.

### BRIEF SUMMARY

The following presents a simplified summary of the invention in order to provide a basic understanding of some aspects of the invention. This summary is not an extensive overview of the invention. It is not intended to identify key or critical elements of the invention or to delineate the scope of the invention. The following summary merely presents some concepts of the invention in a simplified form as a prelude to the more detailed description provided below.

Aspects of the arrangements described herein include a failsafe system for an air deflector on a load counteracting device. In some examples, the failsafe system may include a linkage configured to deploy the air deflector. The linkage may be activated by a pin connected to a gear. In some arrangements, the gear may be rotated by a spring held in position by a latch. When the latch is released, the spring will rotate the gear, thereby deploying the air deflector.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:
FIG. 1 is a perspective view of a wind turbine according to one or more aspects described herein.
FIG. 2 is a cross-section through the rotor blade depicting a first load compensating device with the air deflector in an extended position according to one or more aspects described herein.
FIG. 3 is a cross-section through the rotor blade depicting a second load compensating device with the air deflector in an extended position according to one or more aspects described herein.
FIGS. 4 and 5 are an isometric sectional views through the rotor blade depicting the load compensating device of FIG. 2 with the air deflector in a retracted position (FIG. 4) and in an extended position (FIG. 5).
FIGS. 6 and 7 depict isometric views of an illustrative embodiment of a load compensating device, in isolation, with the air deflector shown in a retracted position (FIG. 6) and in an extended position (FIG. 7) according to one or more aspects described herein.
FIG. 8 illustrates one example gust compensating device that may be used in accordance with the failsafe systems described herein.
FIG. 9 is a perspective view of an example failsafe system according to one or more aspects described herein.
FIG. 10 is an alternate perspective view of the failsafe system of FIG. 9 according to one or more aspects described herein.
FIG. 11 is a schematic view of another failsafe system according to one or more aspects described herein.

### DETAILED DESCRIPTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made without departing from the scope of the present invention.

As discussed above, aspects of the arrangements described herein relate to a failsafe system for a deployable device, such as an air deflector, on a load compensating device. In some examples, the load compensating device may be mounted to an airfoil rotor blade, such as a wind turbine blade. Various aspects may be described in the context of an air deflector mounted to a wind turbine blade, however aspects of the failsafe system may be implemented in a variety of applications without departing from the invention. For instance, aspects of the systems described herein may be used in one or more applications, such as airplanes, rockets, helicopters, etc., without departing from the invention.

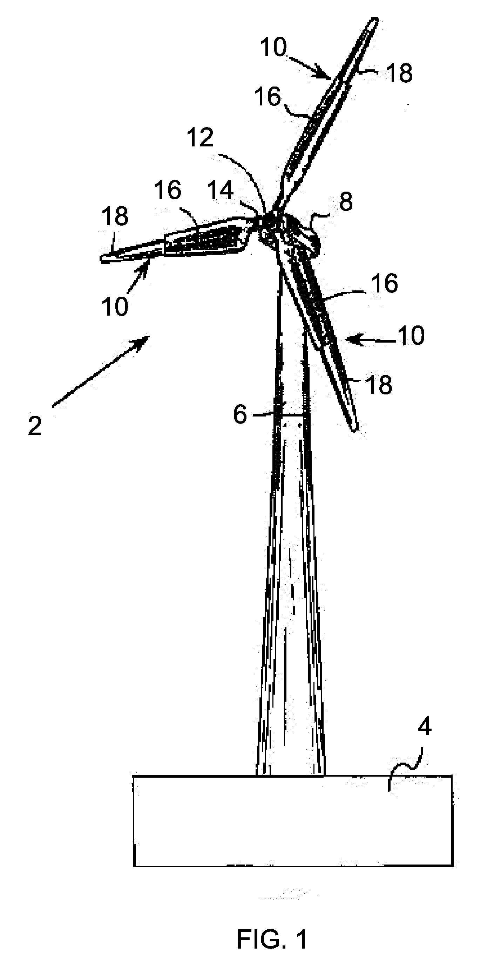

FIG. 1 shows a wind turbine 2 on a foundation 4 with a tower 6 supporting a nacelle 8. One or more blades 10 are attached to a hub 12 via a bolt flange 14. In the depicted embodiment, the wind turbine includes three blades 10. The hub 12 is connected to a gear box, a generator, and other components within the nacelle 8. The blades 10 may have a fixed length or may be of the variable length-type, i.e., telescopic, such as shown in FIG. 1. As shown in FIG. 1, each variable length blade 10 includes a root or base portion 16 and a tip portion 18. The tip portion 18 is movable with respect to the root portion 16 so as to controllably increase and decrease the length of the rotor blade 10, and in turn, respectively increase and decrease the swept area of the rotor blades 10. Any desirable drive system, such as a screw drive, a piston/cylinder, or a pulley/winch arrangement may be used to move the tip portion 18 with respect to the root portion 16. Such drive systems are described in US patent 6,902,370, which is hereby incorporated by reference. The wind turbine 2 further includes a yaw drive and a yaw motor, not shown.

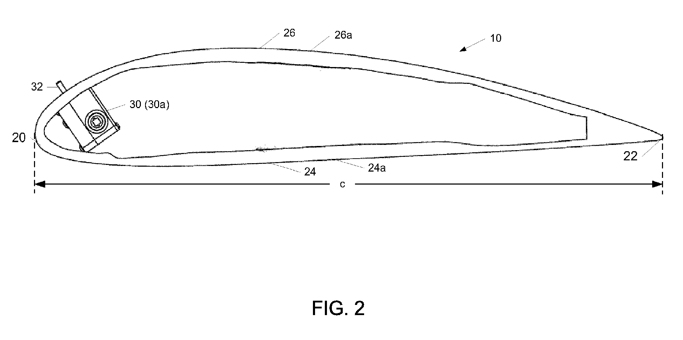

FIGS. 2-5 show a cross section of a wind turbine blade 10 containing at least one load compensating device 30. The blade 10 has a leading edge 20, a trailing edge 22, a high pressure side 24 and a low pressure side 26. A chord line c can be defined as a line between the leading edge 20 and trailing edge 22 of the blade 10. It is recognized that the leading side of the rotor blade 10 corresponds to the leading half of the rotor blade 10 and the trailing side of the rotor blade 10 to the trailing half of the rotor blade 10.

The blade 10 depicted in the figures is merely one illustrative cross-sectional design and it is recognized that infinite cross-sectional variations can be used as part of the present invention. The airfoil rotor blade may be made of any suitable construction and materials, such as fiberglass and/or carbon fiber.

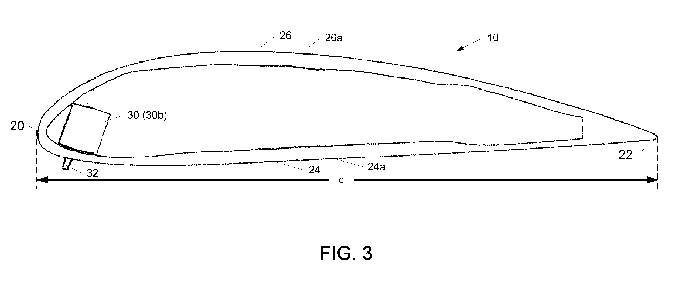

As can be seen in cross sections of FIGS. 2 and 3, the rotor blade 10 further includes at least one load compensating device, generically referenced as reference number 30, but specifically referred to as reference number 30a and 30b with reference to a specific side of the rotor blade 10. FIG. 2 depicts a placement of a first load compensating device 30a to affect the airflow on the low pressure side 26 of the rotor blade 10. FIG. 3 depicts a placement of a second load compensating device 30b to affect the airflow on the high pressure side 24 of the rotor blade 10. It is recognized that in use, the more curved surface 26a and the opposing less curved surface 24a create the dynamics of the low pressure side 26 and the high pressure side 24 due to well-known principles of aerodynamics. This, in combination with the airflow over the rotor blade 10, creates an effect known as "lift" that assists in the rotation of the rotor. The locations depicted are merely some examples of various mounting locations of a load compensating device. A load compensating device, or a plurality of load compensating devices, could be provided at a variety of locations without departing from the invention. Further, the failsafe systems described herein may be used on any type of load compensating device, at any location, without departing from the invention.

In one embodiment, each rotor blade 10 includes at least one first load compensating device 30a to affect the airflow on the low pressure side 26 and at least one second load compensating device 30b to affect the airflow on the high pressure side 24. That is, it includes load compensating devices 30a and 30b, and these devices 30a, 30b may be longitudinally spaced along the rotor blade 10. Any desired number of these devices 30a, 30b may be used. In another embodiment, each rotor blade 10 includes at least one load compensating device 30a to affect the airflow on the low pressure side 26 and no load compensating devices on the high pressure side 24. Any desired number of the devices 30a may be used on the low pressure side 26. In yet another embodiment, each rotor blade 10 includes at least one load compensating device 30b on the high pressure side 24 and no load compensating devices on the low pressure side 26. Any desired number of the devices 30b may be used on the high pressure side 24.

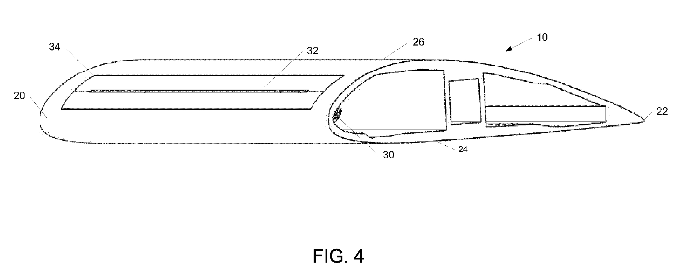

Each load compensating device 30a, 30b includes an air deflector 32. The air deflector 32 is movable between an extended position in which the air deflector 32 extends from an exterior surface of the airfoil rotor blade 10 and a retracted position in which the air deflector 32 is substantially flush with, recessed, or otherwise does not materially extend from the exterior surface of the airfoil rotor blade 10. FIGS. 2 and 3 both show the air deflector 32 in an extended position wherein the air deflector 32 extends from the exterior surface of the rotor blade 10. FIG. 4 is an isometric sectional view through the rotor blade 10 depicting the load compensating device 30a.

In a first arrangement, the location of the air deflectors 32 with respect to the leading edge 20 and the trailing edge 22 of the airfoil rotor blade 26 is in the leading half, i.e., is between 0%-50% of the length of the chord c when measured perpendicularly thereto from the leading edge 20 to the trailing edge 22. In another arrangement, the location of the air deflectors 32 with respect to the leading edge 20 and the trailing edge 22 of the airfoil rotor blade 26 is between 5%-25% of the length of the chord c when measured perpendicularly thereto from the leading edge 20 to the trailing edge 22. In yet another arrangement, the location of the air deflectors 32 with respect to the leading edge 20 and the trailing edge 22 of the airfoil rotor blade 26 is between 5%-15% of the length of the chord c when measured perpendicularly thereto from the leading edge 20 to the trailing edge 22.

The air deflector 32 may be sized based on the desired wind turbine condition parameter and further in view of the number of load compensating devices used. The air deflector may be made from any suitable material, such as fiberglass, carbon fiber, stainless steel, various plastics (such as polycarbonate, polycarbonate filled with TEFLON, etc.) and/or aluminum. The air deflector 32 may be of any desired width, for example from a few inches to several feet. Additionally, air deflector 32 may extend from the airfoil surface to any desired height, e.g., from less than a percent to a few percent of the chord c (FIG. 3), and they may have any suitable thickness based on the material chosen, typically less than one inch.

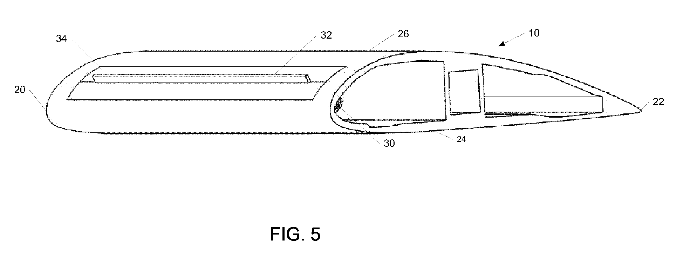

FIGS. 4 and 5 are isometric sectional views through the rotor blade 10 depicting the low pressure side load compensating device 30 with the air deflector 32 in a retracted position (FIG. 4) and in an extended position (FIG. 5). The load compensating device 30 is suitably mounted by an interface to substantially maintain the surface contour the rotor blade 10. This may be accomplished by the use of one or more contoured cover plates 34 that fixedly attach to both the load compensating device 30 and the blade structure. Alternatively, the leading face of the load compensating device 30 may be suitably contoured and fixed to the blade structure. In another arrangement, the leading face of the load compensating device 30 may be mounted to the underside of the blade. Suitable fastening arrangements such as hardware and adhesives may be used.

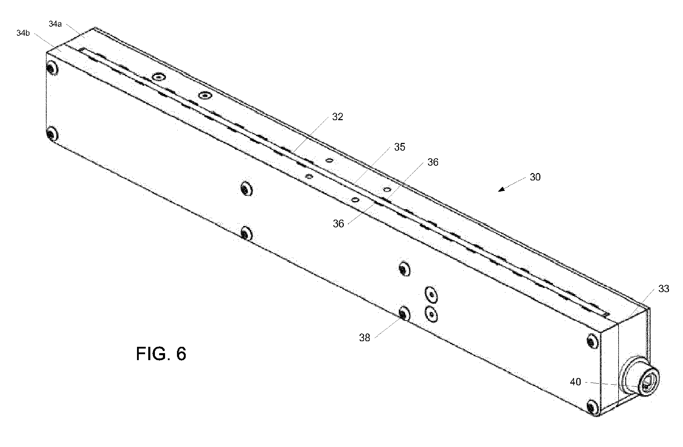

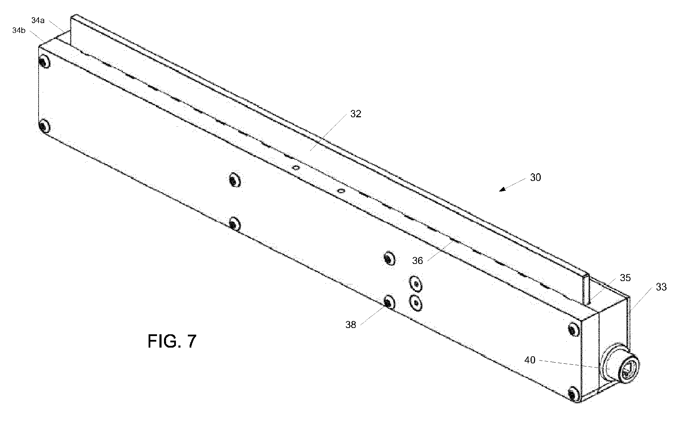

FIGS. 6 and 7 depict isometric views of an illustrative embodiment of a load compensating device 30, in isolation, with the air deflector 32 shown in a retracted position (FIG. 6) and in an extended position (FIG. 7). In a first arrangement, the load compensating device 30 includes frame 33 made from first and second portions 34a and 34b. The portions 34a and 34b interface so as to define a slot 35 in which the air deflector 32 travels. If desired, the facing edges of the first and second portions 34a and 34b include air exhausts 36. Air exhausts 36 are generally used in pneumatic configurations (i.e., where the air deflector 32 is actuated by pressurized air) to release retained pressurized air, thereby allowing the air deflector 32 to return to an alternate position (e.g., retracted or extended). Some arrangements may not include air exhausts 36, and instead may include one or drain holes.

The deployable air deflector of the load compensating device may aid in optimizing operation of the wind turbine to which it is mounted. However, in the event of a power failure or other communication failure, the air deflector may not deploy to manage the load on the airfoil rotor blades. Accordingly, there is a risk of damage to one or more components of the wind turbine because the airfoil rotor blades may exceed their rated loads, etc.

In some examples, the air deflectors may be controlled by a controller, either arranged locally at the load compensating device, or centrally, at a controller connected to a plurality of load compensating devices. The controller may deploy the air deflector in order to optimize operation of the wind turbine. Aspects of air deflector control can be found in U.S. Patent No. 8,267,654, which is incorporated herein by reference.

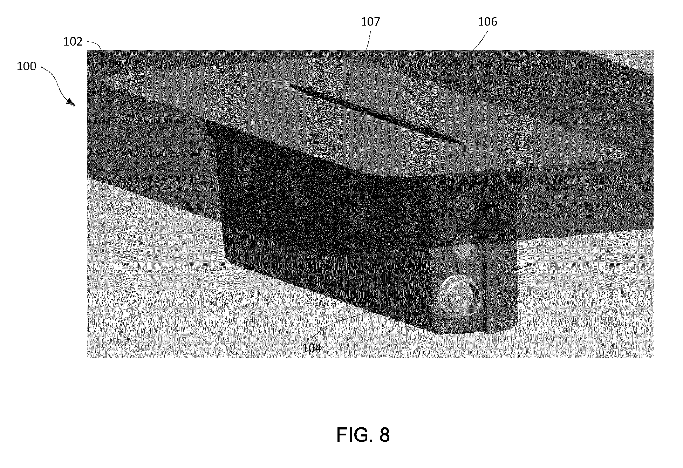

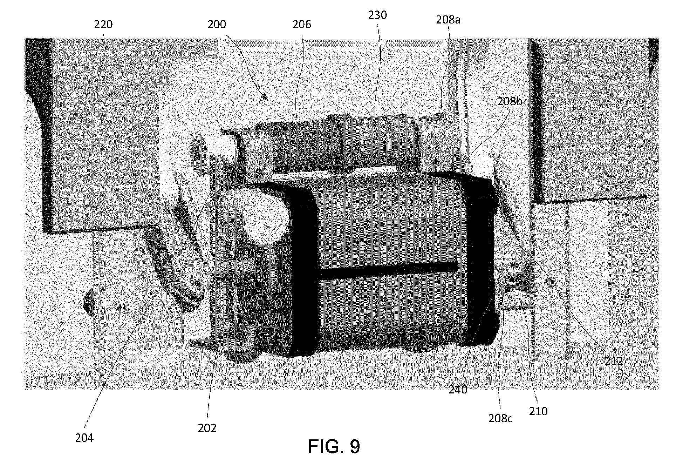

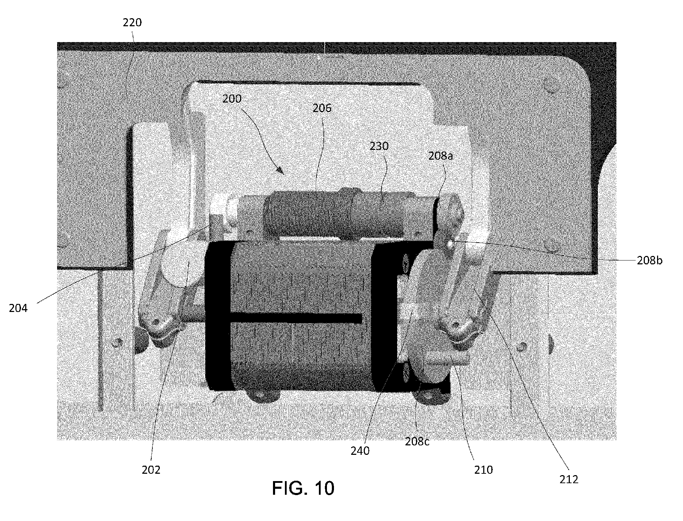

FIG. 8 illustrates one example load compensating device 100. The load compensating device 100 may be connected to an airfoil rotor blade 102 and may include a housing 104 and a cover sheet 106 having an aperture 107 through which an air deflector (not shown in FIG. 8) may extend when deployed. In the event of a communication loss (e.g., the controller has failed or is not communicating with the air deflector) or a power loss, the air deflector may not deploy (or retract) as intended. As mentioned above, this may cause one or more components of the wind turbine to exceed ratings (such as load or fatigue ratings) thereby causing damage to one or more components of the wind turbine. FIGS. 9 and 10 illustrate one example air deflector failsafe system 200 to deploy (or retract) an air deflector during a communication event (e.g., communication loss, power loss, etc.) according to aspects described herein.

In some examples, the failsafe systems described herein may be contained within the housing (such as housing 104 in FIG. 8) of a load compensating device (100 in FIG. 8). In some examples, it may be advantageous to reduce weight and size associated with the failsafe system in order to maintain or improve compactness of the housing and load compensating device. Accordingly, the failsafe systems described herein strive to minimize weight and size associated with the components.

With further reference to FIGS. 9 and 10, the failsafe system 200 may include a release mechanism 202. In some examples, the release mechanism 202 may be a solenoid. The release mechanism 202 may be configured to activate upon the occurrence of a communication event (e.g., a loss of communication, loss of power, and the like). The release mechanism 202 may be connected to a latch 204. The latch 204 may be any suitable latching mechanism. For instance, the latch 204 may include a bar that, when the solenoid or release mechanism 202 is in a first position, may contact a spring 206 or other device (as will be discussed more fully below) to maintain the position of the spring, and when the solenoid or release mechanism 202 is in a second position, may not contact the spring 206 and instead may release the spring 206. In other examples, the latch or some portion thereof may be magnetic.

As discussed above, the latch 204 may control a spring 206. In some examples, the spring may be a torsion spring (e.g., helical torsion spring) and may be biased to rotate a gear or gear system, such as gears 208a-208c when released. The gear 208 may be configured to rotate in order to forcibly deploy the air deflector 220. In some examples, the gear 208 may include a pin or other protrusion 210 extending outward from a surface of the gear 208c. In some examples, the protrusion 210 may be configured to contact a linkage assembly 212 on rotation. The linkage assembly 212 may be connected to air deflector 220 and may extend, thereby deploying air deflector 220. In some examples, the air deflector 220 may be deployed to a fully extended position when deployed using the failsafe system 200.

In some examples, the failsafe system 200 may include a damper 230. The damper may be configured to slow deployment of the air deflector 220 in order to prevent damage, etc. For instance, because the release of the spring 206 will abruptly cause the air deflector 220 to deploy fully, the air deflector 220 or one or more components of the system 200 or load actuating device may be damaged by this abrupt movement. Accordingly, a damper 230 may be used to slow the rotation of the gear 208, thereby slowing the deployment of the air deflector 220 to minimize or avoid any damage.

As shown in FIGS. 9 and 10, the components of the failsafe system 200 are relatively compact and may be formed of lightweight materials, such as fiberglass, carbon fiber or other composite materials, aluminum, steel, stainless steel, plastic, bronze, and the like. Accordingly, the components of the failsafe system 200 may fit within the load compensating device housing (such as housing 104 in FIG. 8).

In some examples, the failsafe system 200 may be activated upon the occurrence of a communication loss event. For instance, if communication between one or more controllers and one or more air deflectors is lost (e.g., due to a network issue, etc.), the failsafe system 200 will activate and will deploy the air deflector 220 to reduce or eliminate the occurrence of the airfoil rotor blade exceeding one or more operating limits, as discussed above. In another example, if there is a power loss to the wind turbine, the failsafe system 200 may activate and deploy the air deflector 220 to also avoid any damage to components of the wind turbine due to exceeding rated limits.

A communication loss event will cause the release mechanism 202 to release the latch 204. For instance, the communication loss event may activate a solenoid 202 in order to draw the latch 204 away from the spring 206. Drawing the latch 204 away from the spring 206 may release the spring 206, thereby rotating the gear system 208 and deploying the air deflector 220. As discussed above, the air deflector 220 may deploy to a fully extended position when deployed using the failsafe system 200. In some examples, a fully deployed position may be 50-60 mm.

Although several examples and arrangements have been discussed in the context of deploying the air deflector 220 using the failsafe system 200, the air deflector 220 may also be retracted using a similar failsafe arrangement without departing from the invention. For instance, the spring 206 may be configured to rotate the gear 208 in an opposite direction (e.g., when the air deflector 220 is already deployed). Rotation of the gear 208 may then retract the air deflector 220. This arrangement may be used, for instance, in situations in which load reduction is not needed and a deployed air deflector 220 would increase drag and reduce power output of the wind turbine. Accordingly, upon a communication loss event, it would be advantageous to retract the air deflector 220 in these, and possibly other, situations.

In some examples, the failsafe system 200 may further include a magnet 240. The magnet 240 may be in contact (or close proximity) to gear 208c and may maintain the position of gear 208c such that pin or protrusion 210 does not contact linkage assembly 212 unless activated by the failsafe system 200. For instance, the magnet 240 may hold the gear 208c in a position having the protrusion 210 out of the way during normal operation to prevent the motor from having to actuate the mass of the failsafe mechanism under normal conditions.

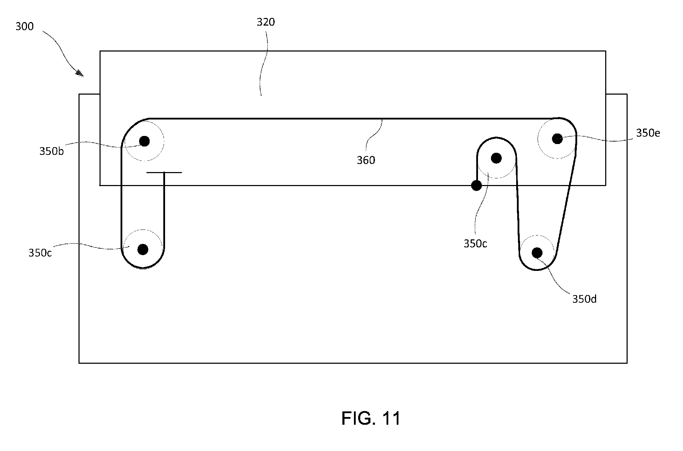

FIG. 11 illustrates another example failsafe system 300. The failsafe system 300 is connected to air deflector 320 and may use a series of pulleys 350a-350e as well as a wire 360 made of a shape-memory alloy to deploy the air deflector 320 during a communication loss event. For instance, the wire 360 may be configured to return to its original, cold forged shape (in this arrangement, may shrink) when heated. As the wire 360 is heated, the wire 360 may shrink along pulleys 350a-350e, thereby causing the air deflector 320 to move upward (e.g., deploy). Accordingly, during a communication loss event, the wire 360 may be heated to shrink and thereby deploy air deflector 320.

The wire 360 may be made of a variety of shape memory materials. In some examples, the wire may be formed of a copper-aluminum-nickel alloy, a nickel-titanium alloy and the like. In some examples, the wire 360 may be formed of an alloy formed of zinc, copper, gold and iron.

As discussed above, the failsafe systems described herein may be used, in some examples, to deploy/retract an air deflector in a load compensating device, such as on a wind turbine blade. However, the failsafe systems may also be used in a variety of applications, such as on other types of airfoils (e.g., airplane wing, helicopter rotor, boat propeller, rockets, etc.) and by deploying and/or retracting various other components.

One or more failsafe systems may also be actuated using pneumatic or hydraulic means (e.g., pneumatic/hydraulic cylinders), magnetic rails, electrical means, and the like. Further, the systems described herein may be used in combination with one or more of these alternatives without departing from the invention.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An air deflector release apparatus, comprising:
a release apparatus configured to activate upon occurrence of a communication loss event;
a latch connected to the release apparatus and configured to be released at activation of the release apparatus;
a spring connected to the latch and configured to release when the latch is released; and
a pin connected to the spring and configured to deploy an air deflector when the spring is released.

2. The air deflector release apparatus of claim 1, wherein the communication loss event is loss of power.

3. The air deflector release apparatus of claim 1, wherein the communication loss event is loss of communication with a controller configured to deploy and retract the air deflector.

4. The air deflector release apparatus of claim 1, wherein the spring is a torsion spring.

5. The air deflector release apparatus of claim 1, further including a damper configured to slow deployment of the air deflector when the spring is released.

6. The air deflector release apparatus of claim 5, wherein the damper is a viscous damper.

7. The air deflector release apparatus of claim 1, further including a magnet configured to maintain a position of the pin prior to release of the spring.

8. An air deflector release apparatus, comprising:
a torsion spring configured to be released upon occurrence of a communication loss event;
wherein the torsion spring, when released, rotates a gear configured to deploy an air deflector to a fully extended position.

9. The air deflector release apparatus of claim 8, wherein the air deflector is arranged on a wind turbine blade.

10. The air deflector release apparatus of claim 8, wherein the communication loss event is loss of communication to a controller configured to control deployment of the air deflector.

11. The air deflector release apparatus of claim 8, further including a damper configured to slow deployment of the air deflector.

12. The air deflector release apparatus of claim 8, further including a latch maintaining a position of the spring prior to occurrence of the communication loss event.

13. The air deflector release apparatus of claim 12, wherein the latch is released by a solenoid upon occurrence of the communication loss event.

14. The air deflector release apparatus, wherein the gear includes a protrusion extending outward from a surface of the gear, the protrusion configured to contact a linkage assembly.

15. The air deflector release apparatus of claim 14, wherein the linkage assembly deploys the air deflector as the protrusion rotates to extend the linkage.

16. A release system, comprising:
a release apparatus configured to activate upon occurrence of a communication loss event; and
a deployable device configured to deploy upon release by the release apparatus.

17. The release system of claim 16, wherein the communication loss event is one of loss of communication with a controller configured to deploy the deployable device and a loss of power.

18. The release system of claim 16, wherein the deployable device is an air deflector on a wind turbine blade.

19. The release system of claim 16, wherein the release apparatus includes:
a gear rotatable by release of a spring, the gear including a protrusion extending therefrom configured to contact a linkage assembly;
a latch maintaining a position of the spring and releasing the spring from the position upon occurrence of the communication loss event;
a release assembly maintaining the latch in an engaged position with the spring and releasing the latch from the engaged position upon occurrence of the communication loss event;
wherein the linkage assembly is configured to deploy the deployable device upon release of the spring.

20. The release system of claim 16, wherein the deployable device is deployed to a fully extended position.
